# EUROPEAN PATENT APPLICATION

(11) **EP 3 483 843 A1**
(43) Date of publication of application: **15.05.2019**
(21) Application number: 18205372.8
(22) Date of filing: 09.11.2018
(51) Int. Cl.: G07C 9/00, E05G 1/00, E05G 1/08, E05B 83/28, A47G 29/14

(54) **SYSTEM FOR STORING AT LEAST ONE ITEM, FOR A VEHICLE**

(30) Priority: 14.11.2017 ES 201731322
(71) Applicant: Seat, S.A., 08760 Martorell (ES)
(72) Inventor: ABAD REIS, Melisa, 08760 MARTORELL (ES); ZAFRA POLONIO, Rebeca, 08760 MARTORELL (ES); UROZ GRANÉ, Cristina, 08760 MARTORELL (ES); OBRADORS VIGUERAS, Albert, 08760 MARTORELL (ES); BAUTISTA FLORENSA, Roger, 08760 MARTORELL (ES); GÁMEZ SOBERBIO, Daniel, 08760 MARTORELL (ES); MARQUÉS CALVO, José Joaquín, 08760 MARTORELL (ES); LÓPEZ LÓPEZ, María José, 08760 MARTORELL (ES); MARRUGAT ESTEVE, Maria, 08760 MARTORELL (ES); SOLA GOMFAUS, Andreu, 08760 MARTORELL (ES); CAUS ROQUETA, Jordi, 08760 MARTORELL (ES); LÓPEZ ROSA, Eva Francisca, 08760 MARTORELL (ES)
(74) Representative: Ponti & Partners, S.L.P

(57) **Abstract**

The system for storing at least one item, for a vehicle, comprises a container (1) for storing the at least one item, in which the container (1) has a plurality of compartments (2), wherein the storage system comprises at least one electronic closure system (3), in which the at least one electronic closure system (3) manages the locking of each compartment (2) independently.The system offers a private housing that cannot be accessed by the other users of a shared vehicle, so that personal items may be stored securely.Fig. 1

## Description

The present invention relates to a system for storing at least one item, for a vehicle.

### Background of the invention

Shared use of vehicles is becoming increasingly common to minimize vehicle purchase and maintenance costs.

For example, vehicle sharing services can be found in major cities, services such as Zipcar® or Avancar®, in which users have an electronic card to lock and unlock access to the vehicle when they need it.

In the currently known shared vehicles it is necessary to remove all personal items after use, for example items stored in the glove box or in the luggage compartment, otherwise these objects would be accessible to all the other users.

The use of individual compartments in vehicles is known, but these compartments are not designed to prevent access by anyone other than the authorized user.

For example, US5667115 discloses a box with compartments for placing under the seats of a vehicle, but this box does not have any secure closure system, and cannot be easily removed.

Therefore, the present invention aims to provide a storage system for vehicles offering a private housing that cannot be accessed by the other users of a shared vehicle, so that personal items may be stored securely.

### Description of the invention

The abovementioned drawbacks are solved by the storage system of the invention, which also offers other advantages, described below.

The system for storing at least one item, for a vehicle, according to the present invention comprises a container for storing the at least one item, in which the container has a plurality of compartments.

Furthermore, the storage system comprises at least one electronic closure system, in which the at least one electronic closure system manages the locking of each compartment independently.

By virtue of this feature, since each compartment is locked independently, only the authorized user can access his compartment, which remains inaccessible to the other users. Thus, the user has a secure space for storing his personal items.

Preferably the at least one electronic closure system is linked to a system for locking the doors of the vehicle. In other words, the electronic closure system is in communication, for example, with the vehicle CPU, such that when the doors are opened, the authorized user's compartment is also opened.

Advantageously, the system for locking the doors of the vehicle comprises a plurality of keys, in which each key is associated with one compartment, such that the at least one electronic closure system manages the locking of each compartment based on the key.

Furthermore, the key associated with a first compartment is different to the key associated with a second compartment, so as to be able to distinguish between the different users of the vehicle.

Therefore, the first compartment linked to the key that unlocks the doors of the vehicle is unlocked while, at the same time, the compartments not linked to the key are locked or kept locked. Thus, each of the users of the vehicle has his own individual compartment.

Note that "key" should be understood in the broadest sense, as it may be a conventional key, a key activated by means of a smartphone, a device with NFC (Near Field Communication) features, for automatically locking and/or unlocking the electronic closure system of a compartment when the vehicle is closed and/or opened.

The at least one electronic closure system may also be linked to a plurality of mobile electronic devices, in which each mobile electronic device is associated with a predetermined compartment. Thus, the at least one electronic closure system manages the locking of each compartment based on the mobile electronic device.

Note that these mobile electronic devices may be additional to, or an alternative to, the key and may be linked to the vehicle closure system, or not.

In this case, each compartment is associated with an electronic device, the electronic device associated with one compartment being different to the electronic device associated with another compartment.

Advantageously, the at least one electronic closure system manages the locking of each compartment based on an electronic signal and/or a code emitted by each mobile electronic device, the electronic signal or code associated beforehand with each compartment being known in advance to the at least one electronic closure system.

Furthermore, if desired, the electronic signal or code associated beforehand with each compartment may be determined by means of an external server.

According to a preferred embodiment, the container is secured to the vehicle structure permanently, for example in the vehicle luggage compartment, in a fixed, non-removable manner. Alternatively, the container may be fastened to the luggage rack or other external location on the vehicle, or to an open luggage compartment in the case of a truck.

The plurality of compartments may also be secured in the container removably, although they may also be fastened in a fixed manner. For example, removable compartments may be advantageous if various small objects are being stored.

If desired, the at least one compartment may comprise a presence detector, in which the presence detector detects the presence of at least one item inside the housing.

To provide information to the user, the at least one compartment comprises an indicator, in which the indicator indicates whether the at least one electronic closure system of the compartment is locked or unlocked.

Advantageously, the storage system comprises an electronic closure system linked to each compartment, which may comprise a lock.

Note that each electronic closure system may comprise a lock, a reader for reading electronic signals or codes emitted by a mobile electronic device, a means for communicating with the system for locking the doors of the vehicle, etc. Therefore, each compartment has all the intelligence and electronics independently of the rest of the compartments.

The storage system may comprise a plurality of locks, in which each lock is linked to each compartment and each lock is linked to an electronic closure system, in which there is a single electronic closure system for the plurality of compartments.

Therefore, in this case, the intelligence is located at a single point. This electronic system comprises a reader for reading electronic signals or codes emitted by a mobile electronic device, a means for communicating with the system for locking the doors of the vehicle, etc.

Thus, the single electronic closure system is in communication with all the locks of the compartments and also with the system for locking the doors of the vehicle.

To allow access to each compartment, each one may comprise a lid hinged to the container, for example, with its hinge opposite the lock, a lid with a hinge in the middle, or with any suitable configuration allowing it to be opened and closed easily.

### Brief description of the drawings

To allow a greater understanding of the above, drawings are provided which show, schematically and only by way of non-limiting example, a practical embodiment of the invention.
Figure 1 is a perspective view of the storage system according to the present invention, in the closed position;
Figure 2 is a perspective view of the storage system according to the present invention, in the closed position and with a compartment removed from its usual position of use; and

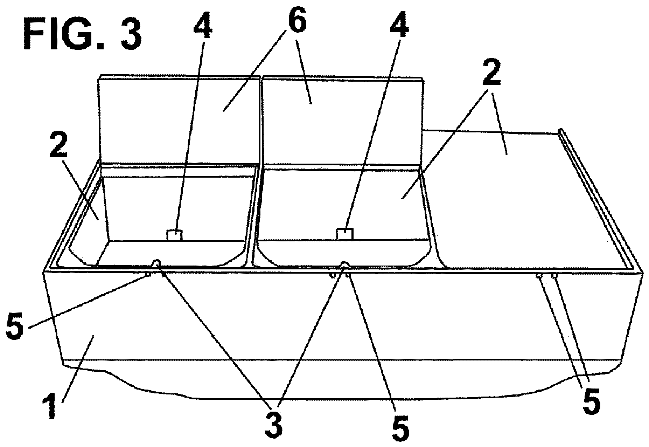

Figure 3 is a perspective view of the storage system according to the present invention, with two of its compartments in the open position.

### Description of a preferred embodiment

As shown in the figures, the storage system according to the present invention comprises a container 1 which is permanently secured to a vehicle, for example, in a luggage compartment of a vehicle or on a luggage rack, or in any suitable position on the inside or outside of the vehicle.

Inside said container 1 are a plurality of compartments 2, three in the embodiment shown, but there could be any appropriate number of compartments. These compartments 2 are designed to hold personal items belonging to the users of the vehicle.

Note that these compartments 2 are individual, i.e. they may be opened and closed individually, as explained below.

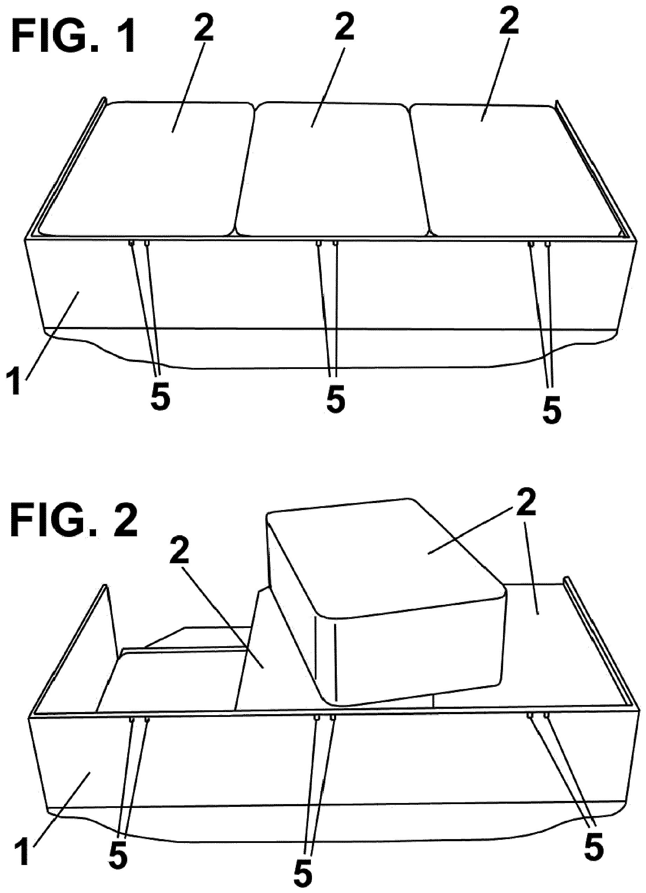

Said compartments 2 may be mounted in the container 1 in a fixed or removable manner, and may be put in place and removed as desired, as shown in Figure 2, for example.

The storage system of the present invention also comprises an electronic closure system 3 for locking and unlocking each compartment 2 independently.

According to the embodiment shown, the electronic closure system 3 includes a lock on each one of the compartments 2, for individual locking and unlocking thereof, and an electronic signal or code reader may be integrated in each lock or there may be a centralized electronic signal or code reader in the vehicle.

The electronic signal or code associated beforehand with each compartment 2 is known in advance to the at least one electronic closure system 3, it may be determined by means of an external server.

If desired, the electronic closure system 3 may be linked to, in other words in communication with, the system for closing the doors of the vehicle, so that when the vehicle doors are unlocked, a compartment 2 is unlocked so that it may be opened, and when the vehicle doors are locked, a compartment 2 is locked, preventing it from being opened.

To this end, the vehicle is capable of recognizing a plurality of different keys, each key being associated with a compartment 2 of the storage system.

The term "key" should be understood in the broadest sense, since a key may be a conventional key used with any vehicle, or an app or the like included in a mobile electronic device, such as a smartphone, or any suitable electronic device that can be used to lock or unlock a door of a vehicle.

Moreover, each compartment 2 may comprise indicators 5 for indicating if the compartment 2 is open or closed, so that the user can see this simply on sight, and each compartment 2 may also comprise a presence detector 4 for detecting the presence of any item inside the compartment 2, which may be indicated to the user in any appropriate manner.

To open and close the compartments 2, each one has a lid 6 which is hinged to the container 1 in any appropriate manner, for example, at its part furthest from the lock.

The storage system according to the present invention works as follows:
If the electronic closure system 3 is linked to or in communication with the system for closing the doors, when the user unlocks the doors, access to one of the compartments 2 is automatically unlocked. The compartment 2 which is unlocked is predetermined as a function of the key detected by the system for closing the doors of the vehicle.

Next, the user simply has to access the corresponding unlocked compartment, which will preferably indicate, by means of the indicator 5, that it is unlocked, opening the hinged lid 6 to place inside or remove any item he wishes.

If desired, the user may also remove the compartment 2 from its position in the container 1, if the compartments 2 are made such that they are removable.

When the user gets out of the vehicle and locks the doors of the vehicle using the key, the corresponding compartment 2 is automatically locked. If any item is left inside the compartment 2, the presence detector 4 will detect same and it may be communicated to the user in any appropriate manner, for example, via a portable electronic device.

If the electronic closure system 3 is not linked to or in communication with the system for closing the doors, the user must unlock the corresponding compartment 2 using a key or electronic device that emits an electronic signal or code.

Next, the user simply has to access the corresponding unlocked compartment, which will preferably indicate, by means of the indicator 5, that it is unlocked, opening the hinged lid 6 to place inside or remove any item he wishes.

If desired, the user may also remove the compartment 2 from its position in the container 1, if the compartments 2 are made such that they are removable.

When the user wishes to lock the compartment 2, he will do so using the key or corresponding electronic device. If any item is left inside the compartment 2, the presence detector 4 will detect same and it may be communicated to the user in any appropriate manner, for example, via a portable electronic device.

Although reference has been made to a specific embodiment of the invention, it is obvious to a person skilled in the art that the storage system described may undergo many changes and modifications, and that all the details mentioned may be substituted by other, technically equivalent details without exceeding the scope of protection defined by the attached claims.

## Claims

1. System for storing at least one item, for a vehicle, which comprises a container (1) for storing the at least one item, in which the container (1) has a plurality of compartments (2), **characterized in that** the storage system comprises at least one electronic closure system (3), in which the at least one electronic closure system (3) manages the locking of each compartment (2) independently.

2. Storage system according to Claim 1, wherein the at least one electronic closure system (3) is linked to a system for locking the doors of the vehicle.

3. Storage system according to Claim 2, wherein the system for locking the doors of the vehicle comprises a plurality of keys, in which each key is associated with one compartment (2), such that the at least one electronic closure system (3) manages the locking of each compartment (2) based on the key.

4. Storage system according to any one of the preceding claims, wherein the at least one electronic closure system (3) is linked to a plurality of mobile electronic devices, in which each mobile electronic device is associated with a predetermined compartment (2), such that the at least one electronic closure system (3) manages the locking of each compartment (2) based on the mobile electronic device.

5. Storage system according to Claim 4, wherein the at least one electronic closure system (3) manages the locking of each compartment (2) based on an electronic signal and/or a code emitted by each mobile electronic device.

6. Storage system according to Claim 5, wherein the electronic signal or code associated beforehand with each compartment (2) is known in advance to the at least one electronic closure system (3).

7. Storage system according to Claim 5, wherein the electronic signal or code associated beforehand with each compartment (2) is determined by means of an external server.

8. Storage system according to any one of the preceding claims, wherein the container (1) is secured to the vehicle structure permanently.

9. Storage system according to any one of the preceding claims, wherein the plurality of compartments (2) are secured in the container (1) removably.

10. Storage system according to any one of the preceding claims, wherein the at least one compartment (2) comprises a presence detector (4), in which the presence detector (4) detects the presence of at least one item inside the housing (2).

11. Storage system according to any one of the preceding claims, wherein the at least one compartment (2) comprises an indicator (5), in which the indicator (5) indicates whether the at least one electronic closure system (3) of the compartment (2) is locked or unlocked.

12. Storage system according to any one of the preceding claims, wherein the storage system comprises an electronic closure system (3) linked to each compartment (2).

13. Storage system according to Claim 12, wherein the electronic closure system (3) comprises a lock.

14. Storage system according to any one of Claims 1 to 11, wherein the storage system comprises a plurality of locks, in which each lock is linked to each compartment (2) and each lock is linked to an electronic closure system (3), in which there is a single electronic closure system (3) for the plurality of compartments (2).

15. Storage system according to any one of the preceding claims, wherein each compartment (2) comprises a hinged lid (6).
